# FASCICULE DE BREVET EUROPEEN

(11) **EP 0 690 804 B1**
(45) Date de publication et mention de la délivrance du brevet: **02.05.1997**
(21) Numéro de dépôt: 95904583.2
(22) Date de dépôt: 21.12.1994
(51) Int. Cl.: B62M 23/02, B62K 17/00, B60K 16/00

(54) **BICYCLETTE UTILISANT L'ENERGIE DU VENT**
FAHRRAD ZUR VERWENDUNG VON WINDENERGIE
BICYCLE USING WIND POWER

(30) Priorité: 28.01.1994 FR 9400944
(43) Date de publication de la demande: 10.01.1996
(73) Titulaire: Perreau, Claude, 92100 Boulogne-Billancourt (FR)
(72) Inventeur: Perreau, Claude, 92100 Boulogne-Billancourt (FR)
(86) Numéro de dépôt international: FR9401508
(87) Numéro de publication internationale: WO9520518

(56) Documents cités:
- DE-C- 119 950
- DE-C- 369 751
- FR-A- 408 617
- US-A- 5 133 637

## Description

La présente invention concerne la fabrication d'un modèle de bicyclette, destiné à utiliser l'énergie du vent.

Les performances d'un cycle ont toujours été fortement limitées par la force éolienne naissant à l'encontre du cycliste et de sa machine à mesure qu'ils progressaient.

Cet handicap, proportionnel à la vitesse du cycliste, n'a pu être que partiellement surmonté par l'utilisation de matériaux sans cesse plus légers, plus aérodynamiques ou même par l'adjonction de carénages, limitant certes les effets négatifs de cette force, mais sans pour autant l'exploiter.

La bicyclette selon l'invention réduit considérablement cet inconvénient par l'effet combiné de la transformation de l'énergie éolienne négative en énergie positive et de la réduction des prises au vent inexploitables.

Elle comporte selon une première caractéristique, une éolienne frontale située au-dessus de la roue avant et dont l'axe de rotation est couplé à celui du pédalier par l'intermé-diaire d'un renvoi d'angle (transmission en équerre) et d'une chaîne. Ce dispositif capte la pression croissante du vent exercé contre la bicyclette puis, au moyen des pales tournoyantes, en transmet l'énergie jusqu'au pédalier où elle s'ajoute à celle dispensée par le cycliste.
Le gisement éolien récupéré ainsi positivement existe même en l'absence totale de vent puisque celui-ci est automatiquement engendré par le déplacement du cycle. Un tel vent, nommé vent apparent, se conjugue au vent réel.

Selon une deuxième caractéristique, le pédalier du cycle d'invention est double en ce sens qu'il est pourvu d'un côté du cadre, des différents plateaux réservés à la transmission avant (celle de l'éolienne), et de l'autre côté, des plateaux destinés à la transmission arrière (celle de la roue motrice). Tous ces plateaux sont solidaires entre-eux.

Selon une troisième caractéristique, l'axe de l'éolienne, celui du pédalier ainsi que celui de la roue arrière, sont chacun montés sur un roulement libre à cliquets qui assure un transfert d'énergie à sens unique des pales et/ou du pédalier vers la roue arrière.

Selon une quatrième caractéristique, un guide chaîne placé à proximité du pédalier, donne choix aux différents plateaux affectés à la chaîne de transmission de l'éolienne. Ce mécanisme permetant de disposer de plusieurs rapports de couple, optimise les effets de la force du vent dans les pales en fonction de la vitesse du cycle.

Selon une cinqième caractéristique, le diamètre réduit de la roue avant est compris entre la moitié et les deux tiers de celui de la roue arrière de manière à ce qu'en situant l'éolienne juste au-dessus de cette petite roue, ses pales profitent d'une bonne exposition au vent et bénéficient de grandes dimensions sans nuire à l'encombrement global de la bicyclette.

Selon une sixième caractéristique, l'inclinaison et les proportions de l'éolienne sont telles qu'en surcroît de son premier rôle de capteur d'énergie, celle-ci abrite aussi derrière ses pales le cadre de la bicyclette et le conducteur jusqu'à hauteur des épaules, afin de réduire au maximum les prises au vent inexploitables.

Selon une septième caractéristique, la tubulure de direction et le tube arrière du cadre, entre lesquels prend place le conducteur, suivent le même degré d'inclinaison que celui de l'éolienne en montant approximativement jusqu'au niveau de son sommet. Cette configuration particulière du châssis ainsi creusé derrière les pales, concourt à procurer au cycliste une position de conduite abritée.

Selon une huitième caractéristique, le mode de fixation du pédalier par une attache centrale située au-dessous du cadre à haute garde au sol, libère les deux chaînes de transmission de la tubulure. (chaîne de transmission avant, reliant l'éolienne au pédalier et chaîne de transmission arrière, reliant le pédalier à la roue arrière.)

Selon une neuvième caratéristique, le tube supérieur et le tube inférieur du cadre maintiennent grâce à un léger prolongement vers l'avant, l'axe de l'éolienne par le haut et par le bas, au-dessus de la petite roue du cycle.

Selon une dixième caractéristique, et à des fins de réglage visant à mieux adapter la bicyclette à la morphologie du conducteur, la selle à dossier ainsi que le pédalier peuvent coulisser indépendamment sur la tubulure du cadre.

Selon une onzième caractéristique, deux tendeurs de chaîne, de part et d'autre du pédalier, garantissent une tension constante des chaînes de transmission en facilitant les réglages relatifs à la dixième caractéristique.

Les dessins annexes illustrent l'invention:
La figure 1 représente, de côté, le modèle d'invention.
La figure 2 représente le pédalier et les transmissions du modèle de bicyclette, conformément à l'invention.

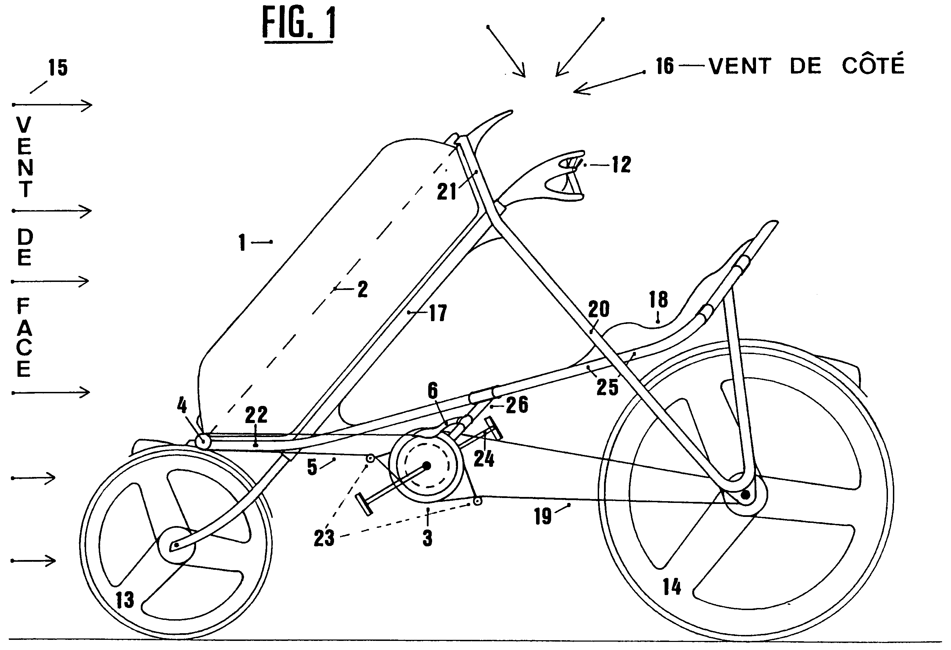

En référence à ces dessins (fig.1), le cycle comporte une éolienne à trois pales (1) située au-dessus de la roue avant (13) et dont l'axe de rotation (2) est couplé au pédalier (3) par l'intermédiaire d'un renvoi d'angle (4) et d'une chaîne de transmission (5).

A mesure que la bicyclette se déplace, le vent s'engouffre dans les pales qui s'animent d'un mouvement de rotation. L'énergie de cette rotation, transmise par le renvoi d'angle (4) et la chaîne (5) jusqu'au pédalier (3), se conjugue aux efforts que le cycliste exerce sur les pédales. Lorsque ce dernier traverse une période de repos, elle est directement transférée à la roue arrière par la seconde chaîne de transmission (19).

Selon une variante non illustrée et des modes particuliers de réalisation, l'éolienne peut avoir un nombre différent de pales et être directement couplée à la roue avant. Sans changer les caractéristiques du cycle et en remplaçant juste la transmission avant par une dynamo, une telle exploitation du gisement éolien peut être également convertie en énergie électrique.

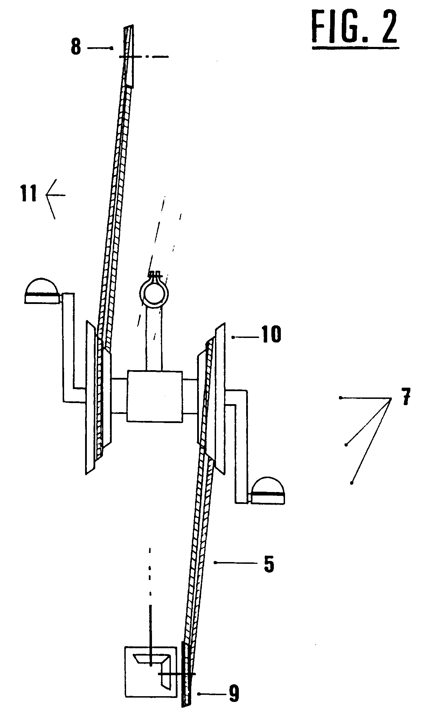

(Fig.2) Dans un souci d'équilibre résultent d'une meilleure répartition des forces, la transmission avant qui comprend: pignon de sortie du renvoi d'angle (9), chaîne (5) et plateaux (10), est située d'un côté du pédalier (7) tandis que les éléments de la transmission arrière incluant le pignon de la roue motrice (8), le sont de l'autre côté (11).

(Fig.1) Le roulement libre à cliquets qui équipe l'axe de chacun des éléments moteurs: éolienne (1), pédalier (3) et roue arrière (14), assure à ces pièces une activité indépendante tant que le force de traction engendrée par le dispositif éolien ne se conjugue pas à celle exercée par le cycliste, ou réciproquement. Quatre éventualités de fonctionnement sont alors possibles:
- A) La rotation de l'éolienne (1) influe sur celle de la roue arrière (14), sans agir sur l'axe du pédalier (3). (seuls ses plateaux sont sollicités.)
- B) La rotation des pédales (24) influe sur la rotation de la roue arrière (14) sans modifier celle de l'éolienne (1). (Seule sa chaîne de transmission (5) est sollicitée.)
- C) La rotation de l'éolienne (1) et celle des pédales (24) entrent en corrélation et cumulent leurs effets pour agir sur la roue arrière (14).
- D) Le cycle d'invention se meut en laissant au repos pédales (24) et éolienne (1), pour profiter d'une lancée acquise, par exemple, ou en descendant une pente.

Le transfert d'énergie du système éolien s'effectue par conséquent toujours des pales (1) vers la roue arrière (14) en passant par les plateaux du pédalier (3) et les chaînes de transmission (5)-(19), sans pouvoir remonter la filière.

(Fig.1) Un guide chaîne faisant office de dérailleur (6), est placé près du pédalier (3), au-dessus de la chaîne de transmission avant (5). Actionné par une manette au guidon (12), il sélectionne le plateau approprie, de façon à maximiser le rendement du dispositif éolien en fonction de la vélocité du cycle. La vitesse de rotation des pales étant ainsi modulable par le jeu de ces différents plateaux, le système permet une récupération et un transfert d'énergie mieux adaptés à la puissance du vent qui varie avec le cube de sa vitesse.

(Fig.1) La taille de la roue avant (13) correspond environ aux deux tiers de celle de la roue arrière (14). Une telle réduction permet de placer l'éolienne juste au-dessus de cette petite roue (13) afin de favoriser ses dimensions et son exposition au vent (15) sans augmenter l'encombrement de la machine.

(Fig.1) L'inclinaison et les proportions de l'éolienne (1) sont telles qu'elles répondent à deux objectifs:
- soulager la bicyclette en mouvement des prises au vent inexploitables en abritant derrière les pales de l'éolienne le cadre ainsi que le cycliste jusqu'à hauteur des épaules.
- présenter, dans les limites du premier objectif, une surface d'exposition au vent optimale qui épouse le profil du cycle sans pour cela accroître son volume.

A titre d'exemple non limitatif, et en considérant un angle d'inclinaison d'environ 50°, des pales de dimmensions de l'ordre de 85 cm pour la hauteur et de 18 cm pour la largeur, pourront assumer ces deux fonctions. De par cette position frontale dégagée, l'éolienne (1) du modèle d'invention autorise également l'exploitation des vents de côté, venant d'un axe perpendiculaire au sens de déplacement de la bicyclette ou bien de biais (16). Leurs effets se conjuguent alors à ceux du vent apparent.

(Fig.1) La tubulure de direction (17) et le tube arrière du châssis (25) entre lesquels prend place le conducteur (18), suivent le même degré d'inclinaison que celui de l'éolienne (1) en montant vers son sommet. Le cadre ainsi creusé derrière les pales (1), abaisse le centre de gravité du cycle tout en assurant une position de conduite abritée des prises au vent pénalisantes (18).

(Fig.1) Le mode de fixation du pédalier (3) par une attache centrale située au-dessous du cadre à haute garde au sol (26), libère les deux chaînes de transmission (5)-(19) de la tubulure du châssis (20)-(22).

(Fig.1) Le tube supérieur et le tube inférieur du cadre (20)-(25), sont légèrement prolongés à l'avant (21)-(22) pour maintenir l'axe de l'éolienne (2) par le haut et par le bas, au-dessus de la petite roue avant (13). Selon une variante non illustrée et des modes particuliers de réalisation, ces deux tubes (20)-(25), peuvent être de section plus fine, dédoublés, et d'un seul tenant, à dessein de faciliter la construction du châssis par une réduction de ses points de rupture.

(Fig.1) La selle à dossier (18) et l'attache du pédalier (26) peuvent coulisser sur la tubulure du cadre (25). Ce double réglage indépendant: "selle" pour la hauteur du buste et "pédalier" pour la longueur de l'entre-jambe, permet une plus grande souplesse d'ajustement afin de mieux adapter le cycle à la morphologie du conducteur. Une même bicyclette, de cadre standard, pourra ainsi plus facilement convenir à un adulte aussi bien qu'à un adolescent. Dans les cas de figure extrèmes, un changement de chaînes peut se révéler nécessaire, opération simplifiée par la huitième caractéristique.

Deux tendeurs de chaîne (23) facilitant les réglages du pédalier (3) en fonction de celui la selle (18), garantissent une bonne tension des deux chaînes de transmission (5)-(19).

La présente invention est particulièrement destinée au déplacement des personnes, tant sur le mode professionnel ou sportif que sur celui des loisirs.

## Revendications

1. Bicyclette, destiné à utiliser l'énergie du vent à des fins d'exploitations mécaniques ou électriques, caractérisé en ce qu'il comporte une large éolienne à pales; et à axe vertical (1) qui, disposée au-dessus de la roue avant réduite du cycle (13) par deux prolongements (21,22) du cadre à forme particulière de sorte qu'elle soulage tout le reste de la machine des prises au vent pénalisantes en étant elle-même source d'énergie, a son axe de rotation (2) parallèle à la tubulure de direction (17) et couplé soit à la roue avant (13), soit au pédalier (3) par l'intermédiaire d'un renvoi d'angle (4) et d'une chaîne de transmission (5).

2. Bicyclette selon la revendication 1, caractérisé en ce que le diamètre réduit de la roue avant (13) est compris entre la moitié et les deux tiers de celui de la roue arrière (14) de manière à positionner l'éolienne (1) juste au-dessus de cette petite roue (13).

3. Bicyclette selon la revendication 1 et la revendication 2, caractérisé en ce que le type, la disposition et les proportions de l'éolienne (1) sont tels qu'en surcroît de son rôle de capteur d'énergie, celle-ci abrite aussi derrière ses pales tout le cadre du cycle et le conducteur jusqu'à hauteur des épaules.

4. Bicyclette selon la revendication 1, caractérisé en ce que le système de transmission (4,5,3) du dispositif éolien (1), reste modulable en fonction de la vitesse du cycle et de la force du vent, par le jeu de différents plateaux attenants au pédalier (3) qui offrent divers rapports de couple.

5. Bicyclette selon la revendication 1 et la revendication 4, caractérisé en ce que le double pédalier (Fig.2) dont tous les plateaux sont solidaires entre-eux, comporte d'un côté (Fig.2-(7) ceux qui sont réservés à la transmission de l'éolienne (Fig.2-(10), et de l'autre côté ceux qui sont affectés à la transmission de la roue arrière (Fig.2-(11).

6. Bicyclette selon les revendications 1,4 et 5, caractérisé en ce que l'axe de l'éolienne (2), celui du pédalier (3) ainsi que celui du moyeux de la roue arrière (14), sont montés sur un roulement libre à cliquets qui garantit un transfert d'énergie à sens unique de l'éolienne vers la roue motrice.

7. Bicyclette selon la revendication 1, caractérisé en ce que la tubulure de direction (17) et l'arrière du tube inférieur du cadre (25), reliés entre-eux par le tube supérieur transversal (20), montent vers le sommet de l'éolienne (1) selon le même degré d'inclinaison et de manière à doter le cycle d'une position de conduite abritée derrière les pales (18) tout en abaissant son centre de gravité.

8. Bicyclette selon les revendications 1,2,3 et 7, caractérisé en ce que le tube supérieur et le tube inférieur du cadre (20-25) sont légèrement prolongés à l'avant (21-22) afin de maintenir par le haut et par le bas, l'axe de l'éolienne (2) juste au-dessus de la petite roue avant (13).

9. Bicyclette selon les revendications 1,4,5 et 7, caractérisé en ce que la selle à dossier (18) et le double pédalier (3) peuvent coulisser de manière autonome sur la tubulure du cadre (25).

10. Bicyclette selon les revendications 1,4,5 et 8, caractérisé en ce que les deux chaînes de transmission (5) et (19), de par la conception particulière du cadre, sont indépendantes et désentravées de la tubulure du châssis (20)-(22).

## Claims

1. Model of bicycle, meant to use the power of the wind, aiming at mechanical or electrical exploitation and characterised by a three blades wind-turbine (1) the shaft of which (2) is parallel to the steering tube (17) and coupled either to the front wheel (13) or to the crankset (3) by a drive chain (5) via a corner gear (4), and which is located just above the reduced front wheel (13) by two frame extensions (21 / 22) in such a way as to relieve the bicycle and the rider up to the shoulders from the opposing wind resistance, being itself in the same time source of energy.

2. Model of bicycle according to claim 1, characterised by the fact that the reduced diameter of the front wheel (13) is sized between the half and two thirds of the one of the rear wheel (14) so as to locate the wind turbine (1) just above that small front wheel (13).

3. Model of bicycle according to claim 1 and claim 2, characterised by the fact that the configuration, the positioning and the proportions of the wind turbine (1) are such that, in addition to its function of energy catcher, this device also shelters behind its blades the bicycle frame and the rider up to the shoulders.

4. Model of bicycle according to claim 1, characterised by the fact that the power's transmission system (4,5,3,) of the wind turbine device (1) can be adjusted to fit the speed of the cyclist as well as the strength of the wind, by the choice of different sprocket-wheels holding to the crankset (3) which provide a variety of torque ratios.

5. Model of bicycle according to claim 1 and claim 4, characterised by the fact that the double crank bears on one side the sprocket-wheels relative to the front drive [power that operates the wind turbine (Sketch.2 (7)] and on the other side those relative to the rear drive [power transmitted to the rear wheel (Sketch.2 (11)]. All those sprocket-wheels are linked together and depend on one another.

6. Model of bicycle according to claim 1,4 and claim 5, characterised by the fact that the shaft of the wind turbine (2), the axle of the crankset (3) as well as the axle of the rear wheel's hub, are fitted on a free wheel system which guarantees one way energy transfer from the wind turbine and/or the crankset to the rear wheel drive (14).

7. Model of bicycle according to claim 1, characterised by the fact that the steering tube (17) and the end of the frame's lower-tube (25), linked together by the upper transversal tube (20), rise parallel to each other with the same slope to the top level of the wind turbine (1), in such a way as to give the bicycle a driving position (18) sheltered behind the blades, while lowering its centre of gravity.

8. Model of bicycle according to claim 1,2,3 and claim 7, characterised by the fact that the upper and the lower frame's tubes (20/25) are slightly extended at the front of the cycle (21/22), in order to support the wind turbine at each end of its shaft (2), just above the small front wheel (13).

9. Model of bicycle according to claim 1,4,5 and claim 7, characterised by the fact that the saddle (18) and the double crank (3) can slide each independently on the frame tube (25)

10. Model of bicycle according to claim 1,4,5 and claim 8, characterised by the fact that the two drive chains (5/19) are independent from each other and unshackled from the tubes of the sub-frame (20/22).

## Patentansprüche

1. Modell eines Fahrrades, das bestimmt ist, die Energie des Windes für mechanische oder elektrische Zwecke zu benützen und zwar dadurch charakterisiert ist, daß vorne eine breite Windscheibe angebracht ist. Diese hat eine senkrechte Achse (1), die über dem kleineren Vorderrad, (13) durch zwei Verlängerungen (21-22) des Rahmens, befestigt ist, sodaß die Windflügel, deren Drehungsachse (2) paralell mit der Direktionstange ist (17) und die mit dem Tretwerk (3) oder mit dem Vorderrad (13) durch die Vermittlung einer Kette und einem Winkelgang gekuppelt sind, selbst Energie erzeugen. Ausserdem ist der Rest des Fahrrades und der Fahrer von dem Druck und der Luftzufuhr des Windes geschützt.

2. Modell eines Fahrrades nach Forderung 1, dadurch charakterisiert, daß der Durchmesser des kleineren Vorderrades (13) zwischen der Hälfte und zwei Drittel des Durchmessers des Hinterrades (14) beträgt, damit die Windscheibe (1) direkt über dem kleinen Vorderrad (13) befestigt werden kann.

3. Modell eines Fahrrades nach den Forderungen 1 und 2, dadurch charakterisiert, daß der Typ, das Einsetzen und die Proportionen der Windscheibe (1) so sind, daß sie außer ihrer Energiequelle den ganzen Rahmen des Fahrrades sowie auch den Fahrer selbst bis zur Höhe der Schultern, schützt.

4. Modell eines Fahrrades nach Forderung 1, dadurch charakterisiert, daß in Verbindung mit der Geschwindigkeit des Fahrers und der Stärke des Windes, das Transmissionssystem der Windscheibe (4-5-3), durch die verschiedenen Zahnräder die am Tretwerk befestigt sind (3) und mehrere Zuzammenhänge ermöglichen, modulierbar ist.

5. Modell eines Fahrrades nach Forderungen 1 und 4, charakterisiert durch ein doppeltes Tretwerk (fig.2) dessen Zahnräder solidarisch sind: auf der einen Seite (fig.2 (7) diejenigen die zu dem Transmissionssystem der Windscheiben dienen und auf der anderen Seite (fig.2 (10) diejenigen, die zu dem Transmissionssystem des Hinterrades dienen (fig 2 (11).

6. Modell eines Fahrrades nach Forderungen 1, 4 und 5, dadurch charakterisiert, daß die Drehungsachse der Windsheibe (2), die des Tretwerkes (3) sowie die Achse des Hinterrades (14) auf einem Kugellager mit Sperrklinke montiert sind, sodaß die Energie der Windflügel nur in Richtung des Treibrades übertragen wird.

7. Modell eines Fahrrades nach Forderung 1 dadurch charakterisiert, daß die Direktionstange (17) die mit dem hinteren Teil der mittleren Stange des Rahmens (25) durch die obere querdurchgehende Stange (20) verbunden ist, in einem gleichen Winkel bis zur Spitze der Windscheibe steigt, sodaß der Schwerpunkt des Fahrrades herabgesetzt wird und die Position des Fahrers hinter den Windflügeln (18) geschützt wird.

8. Modell eines Fahrrades nach Forderungen 1, 2, 3 und 7 dadurch charakterisiert, daß die obere und die untere Stange des Rahmens (20-25) leicht nach vorne verlängert sind (21-22) damit die Drehungsachse der Windscheibe (2) direkt über dem kleinen Vorderrad (13) von oben und von unten befestigt ist.

9. Modell eines Fahrrades nach Forderungen 1,4,5 und 7 dadurch charakterisiert, daß der Sitz mit Lehne (18) und das doppelte Tretwerk (3) sich auf der Stange des Rahmens (25) unabhängig verschieben können.

10. Modell eines Fahrrades nach Forderung 1, 4, 5 und 8 dadurch charakterisiert, daß die zwei Antriebsketten (5-19) voneinander und von der Stange des Rahmens unabhängig sind (20-22).
